(19)

Europäisches Patentamt

European Patent Office

Office européen des brevets

(11) **EP 4 654 324 A1**

(12) **EUROPEAN PATENT APPLICATION**
published in accordance with Art. 153(4) EPC

(43) Date of publication:
**26.11.2025 Bulletin 2025/48**

(21) Application number: **23914519.6**

(22) Date of filing: **21.12.2023**

(51) International Patent Classification (IPC):
**H01M 10/42** (2006.01)

(52) Cooperative Patent Classification (CPC):
**B60R 16/033; H01M 10/04; H01M 10/42;**
**H01M 50/509; H02J 7/00**

(86) International application number:
**PCT/CN2023/140688**

(87) International publication number:
**WO 2024/146386 (11.07.2024 Gazette 2024/28)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **03.01.2023 CN 202310004403**

(71) Applicants:
• **Contemporary Amperex Intelligence Technology**
**(Shanghai) Limited**
**Shanghai 201306 (CN)**

• **Contemporary Amperex Technology Co., Limited**
**Ningde, Fujian 352100 (CN)**

(72) Inventors:
• **ZHANG, Xiaoping**
**Shanghai 201306 (CN)**
• **HU, Guoliang**
**Shanghai 201306 (CN)**
• **JIANG, Liwen**
**Shanghai 201306 (CN)**

(74) Representative: **Gong, Jinping**
**CocreateIP**
**Neumarkter Straße 21**
**81673 München (DE)**

(54) **BATTERY-BASED HYBRID ENERGY SUPPLY METHOD AND APPARATUS, TERMINAL DEVICE, AND STORAGE MEDIUM**

(57) This application pertains to the field of battery technology and provides a battery hybrid power supply method, apparatus, terminal device, and storage medium. The battery hybrid power supply method includes: acquiring a target voltage range and cell open-circuit voltage ranges of at least two types of batteries; calculating, based on the cell open-circuit voltage ranges of the at least two types of batteries, a quantity of the at least two types of batteries matching the target voltage range; the quantity of the at least two types of batteries is configured to construct a hybrid battery pack. This application can overcome the performance limitation issues of the battery pack or electrical system caused by the mismatch between the output voltage range of the battery pack and the operating voltage range of the electrical system in the prior art.

Acquire a target voltage range, and cell open-circuit voltage ranges of at least two types of batteries — 202

Calculate, based on the cell open-circuit voltage ranges of the at least two types of batteries, a quantity of the at least two types of batteries matching the target voltage range — 204

FIG. 2

EP 4 654 324 A1

## Description

This application claims priority to Chinese Patent Application No. 202310004403.2 filed with the China National Intellectual Property Administration on January 3, 2023 and entitled "BATTERY HYBRID POWER SUPPLY METHOD, APPARATUS, AND VEHICLE", which is incorporated herein by reference in its entirety.

## TECHNICAL FIELD

This application pertains to the field of battery technology, and particularly relates to a battery hybrid power supply method, apparatus, terminal device, and storage medium.

## BACKGROUND

When an electrical system operates, the applied voltage value must fall within a certain range (referred to as the operating voltage range) to ensure the normal operation of the devices within the electrical system. This range is often related to the sensitivity of the electrical equipment. Generally, the more precise the equipment, the higher its sensitivity, and the smaller the normal variation range of its operating voltage. Correspondingly, the output voltage of a battery also has a range (referred to as the output voltage range), namely, the battery operating voltage with the charge cutoff voltage and discharge cutoff voltage as endpoints.

When a battery pack is used to power an electrical system, to match the operating voltage range of the electrical system, multiple battery cells are often connected in series to form a battery pack to obtain a relatively matched output voltage range.

However, due to the physicochemical properties of batteries, the output voltage range of the battery pack often cannot strictly match the operating voltage range of the electrical system, resulting in the problem of sacrificing the performance and efficiency of the electrical system to match the output voltage range of the battery pack, or limiting the output voltage of the battery pack through software, sacrificing part of the performance of battery pack to ensure the operation of the electrical system.

Therefore, providing a battery power supply method capable of addressing the performance limitation issues of the battery pack or electrical system caused by the mismatch between the output voltage range of the battery pack and the operating voltage range of the electrical system has become an urgent technical problem in the industry.

## SUMMARY

Embodiments of this application provide a battery hybrid power supply method, apparatus, terminal device, and storage medium, which can address the performance limitation issues of the battery pack or electrical system caused by the mismatch between the output voltage range of the battery pack and the operating voltage range of the electrical system.

## TECHNICAL SOLUTION

The technical solutions adopted by the embodiments of this application are as follows:

In a first aspect, an embodiment of this application provides a battery hybrid power supply method, including:

acquiring a target voltage range, and cell open-circuit voltage ranges of at least two types of batteries; and
calculating, based on the cell open-circuit voltage ranges of the at least two types of batteries, a quantity of the at least two types of batteries matching the target voltage range; where the quantity of the at least two types of batteries is configured to construct a hybrid battery pack.

In a possible implementation of the first aspect, the step of calculating, based on the cell open-circuit voltage ranges of the at least two types of batteries, a quantity of the at least two types of batteries matching the target voltage range includes:

calculating, based on the target voltage range and the cell open-circuit voltage ranges of the at least two types of batteries, a numerical solution or a numerical solution set for the quantity of the at least two types of batteries; and
rounding the numerical solution or the numerical solution set to obtain the quantity of the at least two types of batteries.

In a possible implementation of the first aspect, the step of rounding the numerical solution or the numerical solution set to obtain the quantity of the at least two types of batteries includes:

rounding the numerical solution set to obtain an integer solution set; and
determining, based on cell capacities of the at least two types of batteries and a preset target total capacity, one integer solution from the integer solution set as the quantity of the at least two types of batteries.

In a possible implementation of the first aspect, the hybrid battery pack is configured to power a preset electrical system, an output voltage range of the hybrid battery pack being a subset of an operating voltage range of the electrical system; and the output voltage range of the hybrid battery pack is calculated based on the quantity of the at least two types of batteries and the cell open-circuit voltage ranges of the at least two types of batteries.

In a possible implementation of the first aspect, the hybrid battery pack is configured to power the preset electrical system, the output voltage range of the hybrid battery pack being a subset of the operating voltage range of the electrical system; and the output voltage range of the hybrid battery pack is calculated based on the quantity of the at least two types of batteries, the cell open-circuit voltage ranges of the at least two types of batteries, cell internal resistances of the at least two types of batteries, and a power of the electrical system.

In a possible implementation of the first aspect, the at least two types of batteries include a target battery, a quantity of the target battery being positively correlated with an upper limit of the target voltage range, and the quantity of the target battery being positively correlated with a lower limit of the target voltage range; and the quantity of the target battery is negatively correlated with an upper limit of a cell open-circuit voltage range of the target battery, and the quantity of the target battery is negatively correlated with a lower limit of the cell open-circuit voltage range of the target battery.

In a possible implementation of the first aspect, the at least two types of batteries include a first battery, the first battery being a sodium-ion battery; and the electrical system includes a vehicle electrical system.

In a possible implementation of the first aspect, a ratio of an upper limit of a cell open-circuit voltage range of the first battery to a lower limit of the cell open-circuit voltage range of the first battery is greater than a ratio of an upper limit of the target voltage range to a lower limit of the target voltage range.

In a possible implementation of the first aspect, the at least two types of batteries further include a second battery, the second battery being a ternary lithium-ion battery or a lithium iron phosphate battery.

In a possible implementation of the first aspect, a ratio of an upper limit of a cell open-circuit voltage range of the second battery to a lower limit of the cell open-circuit voltage range of the second battery is less than a ratio of an upper limit of the target voltage range to a lower limit of the target voltage range.

In a possible implementation of the first aspect, the calculating, based on the cell open-circuit voltage ranges of the at least two types of batteries, a quantity of the at least two types of batteries matching the target voltage range includes:

forming a first equation based on the lower limit of the cell open-circuit voltage range of the first battery, the lower limit of the cell open-circuit voltage range of the second battery, and the lower limit of the target voltage range; forming a second equation based on the upper limit of the cell open-circuit voltage range of the first battery, the upper limit of the cell open-circuit voltage range of the second battery, and the upper limit of the target voltage range; and

obtaining, based on the first equation and the second equation, a quantity of the first battery and a quantity of the second battery

In a possible implementation of the first aspect, the second battery is the ternary lithium-ion battery, and the at least two types of batteries further include a third type of battery, the third type of battery being the lithium iron phosphate battery.

In a second aspect, an embodiment of this application provides a battery hybrid power supply apparatus, including:

an acquisition module configured to acquire a target voltage range, and cell open-circuit voltage ranges of at least two types of batteries; and a calculation module configured to calculate, based on the cell open-circuit voltage ranges of the at least two types of batteries, a quantity of the at least two types of batteries matching the target voltage range; where the quantity of the at least two types of batteries is a construction constraint parameter of a hybrid battery pack; and the hybrid battery pack is configured to power a preset electrical system.

In a third aspect, an embodiment of this application provides a terminal device, including a memory, a processor, and a computer program stored in the memory and executable on the processor, where the processor, when executing the computer program, implements the battery hybrid power supply method according to any one of the first aspect.

In a fourth aspect, an embodiment of this application provides a computer-readable storage medium, the computer-readable storage medium storing a computer program, where the computer program, when executed by a processor, implements the battery hybrid power supply method according to any one of the first aspect.

In a fifth aspect, an embodiment of this application provides a computer program product, where when the computer program product runs on a terminal device, the terminal device executes the battery hybrid power supply method according to any one of the first aspect.

**BENEFICIAL EFFECTS**

The beneficial effect of the first aspect provided by the embodiments of this application lies in that: the method avoids the mismatch between the output voltage range of a battery pack composed of a specific type of battery cells and the operating voltage range of an electrical system by using a hybrid of at least two types of batteries. The quantity of the at least two types of batteries introduced into the hybrid battery pack can be adjusted as a variable to regulate the output voltage range of the hybrid battery pack. Thus, for a specific electrical system, a target voltage range is set based on its operating voltage range, and the quantity of the at least two types of batteries for constructing the hybrid battery pack can be calculated based on the cell open-circuit voltage ranges of the at least two types of batteries. With this quantity as a constraint, a hybrid battery pack matching the operating voltage range of the electrical system is constructed, overcoming the performance limitation issues of the battery pack or electrical system caused by the mismatch between the output voltage range of the battery pack and the operating voltage range of the electrical system in the prior art.

It can be understood that the beneficial effects of the second to fifth aspects can refer to the relevant description in the first aspect and are not repeated here.

**BRIEF DESCRIPTION OF DRAWINGS**

To more clearly illustrate the technical solutions in the embodiments of this application, the drawings required for the description of the embodiments or the prior art are briefly introduced below. Obviously, the drawings described below are only some embodiments of this application, and those skilled in the art can obtain other drawings based on these drawings without creative effort.

FIG. 1 is a schematic diagram of an application scenario provided by an embodiment of this application.
FIG. 2 is a schematic flowchart of a battery hybrid power supply method provided by an embodiment of this application.
FIG. 3 is a schematic diagram comparing voltage characteristics of a hybrid battery pack with a second battery being a lithium iron phosphate battery and voltage characteristics of a sodium-ion battery pack provided by an embodiment of this application.
FIG. 4 is a schematic diagram comparing voltage characteristics of a hybrid battery pack with a second battery being a ternary lithium-ion battery and voltage characteristics of a sodium-ion battery pack provided by an embodiment of this application.
FIG. 5 is a schematic diagram of a first arrangement structure of a hybrid battery pack provided by an embodiment of this application.
FIG. 6 is a schematic diagram of a second arrangement structure of a hybrid battery pack provided by an embodiment of this application.

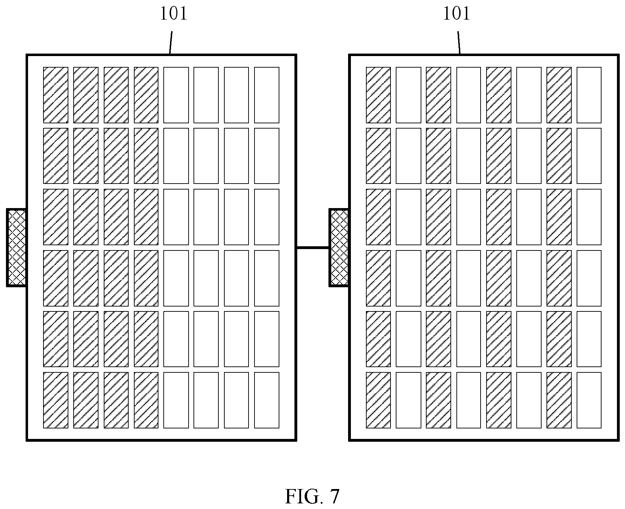

FIG. 7 is a schematic diagram of a third arrangement structure of a hybrid battery pack provided by an embodiment of this application.
FIG. 8 is a schematic structural diagram of a battery hybrid power supply apparatus provided by an embodiment of this application.
FIG. 9 is a schematic structural diagram of a terminal device provided by an embodiment of this application.

Reference signs:

hybrid battery pack 101;
vehicle electrical system 102;
hybrid power supply system 103;
acquisition module 801;
calculation module 802;
terminal device 90;
processor 901;
memory 902; and
computer program 903.

**DESCRIPTION OF EMBODIMENTS**

In the following description, for purposes of illustration and not limitation, specific details such as particular system structures and techniques are set forth to provide a thorough understanding of the embodiments of this application. However, it will be apparent to those skilled in the art that this application may be practiced in other embodiments without these specific details. In other instances, detailed descriptions of well-known systems, apparatuses, circuits, and methods are omitted to avoid unnecessary details obscuring the description of this application.

It should be understood that when used in the specification and the appended claims of this application, the term "include" indicates the presence of the described features, integers, steps, operations, elements, and/or components, but does not preclude the presence or addition of one or more other features, integers, steps, operations, elements, components, and/or collections thereof.

It should also be understood that the term "and/or" as used in the specification and the appended claims of this application refers to any and all possible combinations of one or more of the associated listed items and includes such combinations.

As used in the specification and the appended claims of this application, the term "if" may be interpreted contextually as "when" or "once" or "in response to determining" or "in response to detecting." Similarly, the phrases "if determined" or "if [the described condition or event] is detected" may be interpreted contextually to mean "upon determining" or "in response to determining" or "upon detecting [the described condition or event]" or "in response to detecting [the described condition or event]."

Furthermore, in the description of the specification and the appended claims of this application, the terms "first", "second", "third", and the like are used only to distinguish descriptions and are not to be construed as indicating or implying relative importance.

References to "one embodiment" or "some embodiments" described in the specification of this application mean that a particular feature, structure, or characteristic described in connection with the embodiment is included in one or more embodiments of this application. Therefore, expressions such as "in one embodiment", "in some embodiments", "in some other embodiments", and "in some different embodiments" appearing in different places in this specification do not necessarily refer to the same embodiment, but mean "one or more but not all embodiments", unless otherwise specified. The terms "include", "comprise", and "have", and their variants all mean "including but not limited to", unless otherwise specified.

The power supply process of a battery can be understood as a dynamic equilibrium state of electrochemistry. For different batteries, due to their electrochemical structures, reaction systems, and operating environments, the voltage ranges they can provide vary, that is, their voltage characteristic curves differ.

Similarly, devices in an electrical system also need to operate within a specific operating voltage range to ensure good efficiency and operating conditions.

Ideally, a battery with an appropriate voltage characteristic curve can be selected and formed into a battery pack through series or parallel connections to power the electrical system, such that the output voltage range of the battery pack (obtained based on the voltage characteristic curve of the battery cells, the series-parallel structure, and the quantity) strictly matches the operating voltage range of the electrical system. In this case, the performance of both the electrical system and the battery pack can be fully utilized.

However, in practical engineering applications, the above ideal situation is often difficult to achieve. It is rare to find battery cells with a specific voltage characteristic curve that can be integrated into a suitable battery pack through circuit means such as series or parallel connections to achieve a scenario where the output voltage range strictly matches the operating voltage range of the electrical system.

As a compromise, even if a suitable battery type can be selected to match the operating voltage range of the electrical system, other characteristics of this battery may still have shortcomings, such as high cost or large volume.

To overcome these issues, a relatively straightforward approach is to limit the output voltage of the battery pack through software, applying it only within the voltage range of the voltage characteristic curve that matches the electrical system, at the cost of losing some capacity (that is, SOC, state of charge). This achieves a match between a battery with comprehensive advantages and the electrical system. Alternatively, the full capacity of the battery is utilized, but the electrical system operates outside its operating voltage range for part of the time, sacrificing some performance and lifespan of the electrical system to achieve a match between a battery with comprehensive advantages and the electrical system.

Obviously, there is still room for optimization in the above approach.

It is worth noting that the above issues exist in any scenario where a battery pack is used to power an electrical system. The following will use an electric vehicle as a typical scenario to illustrate the inventive concept of this application.

The actual operating voltage range of the high-voltage electrical system of an electric vehicle is determined by the operating voltage range of the battery system, which is related to the open-circuit voltage (OCV), internal resistance, and operating current at the current state of charge (SOC).

An excessively wide operating voltage range of the high-voltage electrical system of the vehicle affects the performance, operating efficiency, and other aspects of high-voltage electrical subsystems such as motor controllers, electric heaters (PTC), drive motors, air conditioning compressors, and on-board chargers (OBC), posing challenges to the matching design of the entire vehicle. Taking the current mainstream 400V voltage platform for passenger vehicles as an example, the typical operating voltage range of the matched high-voltage system is approximately 200V to 480V.

On the other hand, as the main energy storage apparatus of an electric vehicle, the battery system accounts for a significant portion of the cost of the vehicle. Reducing the cost of the battery system through new technologies and materials has always been an industry goal, and sodium-ion batteries have the potential to significantly reduce battery costs. However, the static open-circuit voltage (OCV) range of sodium-ion batteries from a fully discharged state to a fully charged state is wider compared to ternary lithium-ion batteries and lithium iron phosphate batteries. This results in poor compatibility between a battery system composed of sodium-ion batteries alone and the operating voltage bandwidth of current mainstream high-voltage electrical systems. To address this issue, either the high-voltage systems such as motor controllers and on-board chargers need to be redeveloped to match the voltage characteristics of sodium-ion batteries, or the performance or efficiency of the high-voltage electrical system is sacrificed, or the charge-discharge depth of the sodium-ion battery system is narrowed, sacrificing the available capacity of the battery system (failing to fully utilize the economic advantages of sodium-ion batteries).

In other words, in the exemplary scenario of an electric vehicle, the issue is specifically that sodium-ion batteries, which are more economical (with lower costs), are limited by their voltage characteristics (a typical sodium-ion battery cell has an open-circuit voltage range of 1.5V to 4.2V; it should be understood that the terminal voltage characteristics of batteries from different manufacturers and with different specific formulations may slightly vary), making them unable to match the 200V to 480V operating voltage range required by the high-voltage electrical system of the vehicle.

In other words, a sodium-ion battery pack formed by connecting 120 sodium-ion battery cells with an open-circuit voltage range of 1.5V to 4.2V in series (120S) has an output voltage range of approximately 180V to 530V. The ranges of 180V to 200V and 480V to 530V may cause abnormal operation of the high-voltage electrical system of the vehicle, leading to performance limitations of the electrical system of the vehicle, or wasting part of the available SOC of the sodium-ion battery pack.

To address this issue, the inventor has noted that a 120S ternary lithium-ion battery pack has an output voltage range of approximately 300V to 420V, and a 120S lithium iron phosphate battery pack has an output voltage range of approximately 360V to 470V. Both ranges are narrower than that of the sodium-ion battery pack and also narrower than the operating voltage range required by the high-voltage system of the vehicle. Therefore, by using sodium-ion batteries in combination with lithium iron phosphate batteries and/or ternary lithium-ion batteries, the cost of the hybrid battery pack 101 can be reduced by incorporating sodium-ion batteries, while ensuring that the output voltage range of the hybrid battery pack 101 matches the requirements of the high-voltage electrical system of the vehicle

It can be understood that, beyond the scenario of electric vehicles, for any electrical system powered by a battery pack, a hybrid power supply scheme can be used to incorporate batteries with comprehensive advantages but poor voltage range compatibility into the hybrid battery pack 101 to leverage the advantages of such batteries.

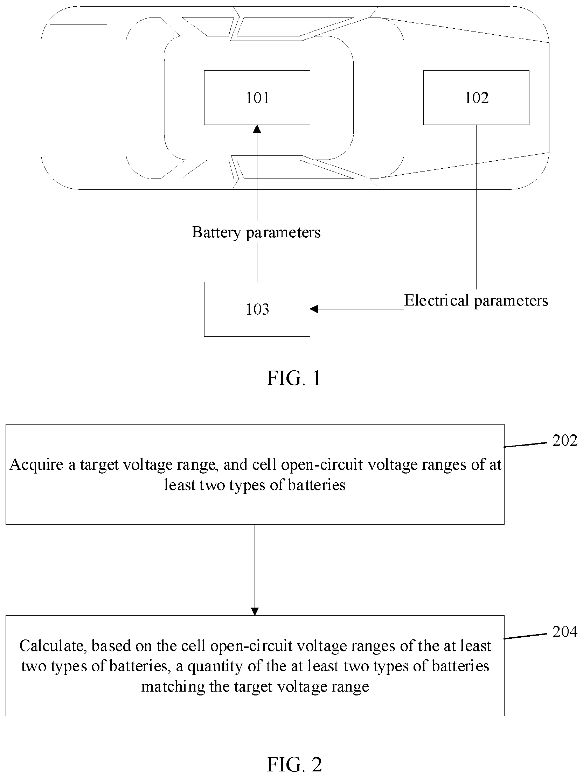

In other words, an embodiment of this application provides a battery hybrid power supply method. FIG. 1 illustrates an optional application scenario of this method. In the example of FIG. 1, the method of this embodiment is stored as a program in the hybrid power supply system 103. When executing the program of this embodiment, the hybrid power supply system 103 acquires electrical parameters of the vehicle electrical system 102 (for example, the target voltage range), combines them with the cell open-circuit voltage ranges of at least two types of batteries to be used, calculates construction constraint parameters for the hybrid battery pack 101, and constructs the hybrid battery pack 101 installed in the vehicle based on these parameters.

Specifically, as shown in FIG. 2, the method of this embodiment includes:

Step 202: Acquire a target voltage range, and cell open-circuit voltage ranges of at least two types of batteries;

Step 204: Calculate, based on the cell open-circuit voltage ranges of the at least two types of batteries, a quantity of the at least two types of batteries matching the target voltage range; where the quantity of the at least two types of batteries is configured to construct a hybrid battery pack 101.

In this embodiment, the target voltage range is determined based on parameters of a preset electrical system. In some optional implementations, it can be understood as the ideal operating voltage range of the electrical system.

It is worth noting that, in some cases, the model performance (for example, voltage characteristic curve) of battery cells of the same type in the hybrid battery pack 101 is identical. Since the quantity of each type of battery in the hybrid battery pack 101 is an integer (that is, in these cases, specially made battery cells with performance differing from other battery cells of the same type are not considered as non-integer "other battery cells"), the actual output voltage range of the hybrid battery pack 101 constructed based on the quantity of the at least two types of batteries obtained in step 204 may slightly differ from the target voltage range.

Additionally, the quantity of the at least two types of batteries can be understood as one of the constraint parameters of the hybrid battery pack 101, meaning that the construction of the hybrid battery pack 101 may also consider other constraint parameters beyond the quantity of the at least two types of batteries.

In this embodiment, the cell open-circuit voltage range of any type of battery may use the charge cutoff voltage and discharge cutoff voltage of the battery cell as the range endpoints, or alternatively, use the static open-circuit voltage OCV of the battery cell as the cell open-circuit voltage range.

In an optional implementation, the hybrid battery pack 101 includes at least one hybrid unit, with battery cells within the hybrid unit connected in series. For cases where the hybrid battery pack includes multiple hybrid units, the multiple hybrid units may be connected in series, in parallel, or in a combination based on the requirements of the electrical system.

By way of example and not limitation, the at least two types of batteries include a first battery and a second battery, a ratio of an upper limit of a cell open-circuit voltage range of the first battery to a lower limit of the cell open-circuit voltage range of the first battery being greater than a ratio of an upper limit of the target voltage range to a lower limit of the target voltage range; and a ratio of an upper limit of a cell open-circuit voltage range of the second battery to a lower limit of the cell open-circuit voltage range of the second battery being less than a ratio of an upper limit of the target voltage range to a lower limit of the target voltage range.

In this example, the first battery is a type of battery with comprehensive advantages (for example, better economic efficiency, lower cost, and the like), but its open-circuit voltage range is wide, making it impossible to form a battery pack matching the operating voltage range of the electrical system through direct series connection. The second battery, on the other hand, has a narrower open-circuit voltage range (with an upper-to-lower limit ratio less than that of the operating voltage range of the electrical system), capable of at least partially offsetting the wide open-circuit voltage range issue of the first battery in the hybrid battery pack 101.

In a preferred solution, the second battery should also have relatively good comprehensive advantages (but inferior to the first battery in some parameters) and a narrower open-circuit voltage range.

In this example, in addition to the first battery and the second battery, other types of batteries may also be present. Due to the presence of the second battery, the output voltage range of the hybrid battery pack 101 can be adjusted, so theoretically, there are no restrictions on the open-circuit voltage range of other types of batteries.

The beneficial effect of this embodiment lies in that:

by using a hybrid of at least two types of batteries, the mismatch between the output voltage range of a battery pack composed of a specific type of battery cells and the operating voltage range of an electrical system is avoided. The quantity of the at least two types of batteries introduced into the hybrid battery pack 101 can be adjusted as a variable to regulate the output voltage range of the hybrid battery pack 101. Thus, for a specific electrical system, a target voltage range is set based on its operating voltage range, and the quantity of the at least two types of batteries for constructing the hybrid battery pack 101 can be calculated based on the cell open-circuit voltage ranges of the at least two types of batteries. With this quantity as a constraint, a hybrid battery pack 101 matching the operating voltage range of the electrical system is constructed, overcoming the performance limitation issues of the battery pack or electrical system caused by the mismatch between the output voltage range of the battery pack and the operating voltage range of the electrical system in the prior art.

According to the above embodiment, in another embodiment:

the step of calculating, based on the cell open-circuit voltage ranges of the at least two types of batteries, a quantity of the at least two types of batteries matching the target voltage range includes:

calculating, based on the target voltage range and the cell open-circuit voltage ranges of the at least two types of batteries, a numerical solution or a numerical solution set for the quantity of the at least two types of batteries, and

rounding the numerical solution or the numerical solution set to obtain the quantity of the at least two types of batteries.

In this embodiment, the results of the numerical solution and the numerical solution set correspond to different numbers of battery types and constraint parameters, respectively. Some optional implementations of this embodiment are exemplified below.

In an optional implementation, in the step of calculating the quantity of the at least two types of batteries based on the target voltage range and the cell open-circuit voltage ranges of the at least two types of batteries, the known quantities are the target voltage range and the cell open-circuit voltage ranges of two types of batteries (a first battery and a second battery), and the quantities of these two types of batteries are to be solved.

In this implementation, the number of unknowns (that is, the quantities to be solved) is two, namely, the quantity of the first battery and the quantity of the second battery. Accordingly:

a first equation is formed based on the lower limit of the cell open-circuit voltage range of the first battery, the lower limit of the cell open-circuit voltage range of the second battery, and the lower limit of the target voltage range; and

a second equation is formed based on the upper limit of the cell open-circuit voltage range of the first battery, the upper limit of the cell open-circuit voltage range of the second battery, and the upper limit of the target voltage range.

The first equation and the second equation are combined to form a system of equations, enabling the determination of a unique numerical solution for the quantity of the first battery and the quantity of the second battery.

In some cases, the numerical solutions for the quantity of the first battery and the quantity of the second battery are exactly integers, and the unique numerical solution of the equation system can be used as the battery cell quantity constraint parameter for the hybrid battery pack 101. In this case, the output voltage range of the constructed hybrid battery pack 101 strictly matches the target voltage range.

In other cases, the numerical solutions for the quantity of the first battery and the quantity of the second battery are non-integers. Considering the manufacturing cost of non-standard battery cells, the non-integer numerical solutions can be rounded to obtain the battery cell quantity constraint parameter for the hybrid battery pack 101, with an output voltage approximating the target voltage range.

Since the rounding process may cause the output voltage range of the finally constructed hybrid battery pack 101 to deviate from the target voltage range, additional constraint conditions can be used to control the rounding method, such as considering the power of the electrical system and the internal resistance of the hybrid battery pack 101 to constrain the actual power supply voltage

In another optional implementation, in the step of calculating the quantity of the at least two types of batteries based on the target voltage range and the cell open-circuit voltage ranges of the at least two types of batteries, the known quantities are the target voltage range and the cell open-circuit voltage ranges of N types of batteries (a first battery, a second battery, ... , an i-th type of battery, ..., an N-th type of battery), and the quantities of these N types of batteries are to be solved.

Similar to the above implementation, by establishing an equation system including the first equation and the second equation, an infinite number of numerical solution sets can be obtained, where each numerical solution is a sequence with N elements.

The process of determining a numerical solution from the numerical solution set as the quantity of the N types of batteries can also incorporate additional constraint conditions, such as selecting the integer sequence numerical solution that maximizes the quantity of the N-th type of battery.

The beneficial effect of this embodiment lies in that:

it adapts to different numbers of battery types, obtaining numerical solutions or numerical solution sets for various types of batteries and rounding them, providing optimization and selection space for the construction parameters of the hybrid battery pack 101 with multiple types of batteries, thus laying a good foundation for optimizing the matching degree between the hybrid battery pack 101 and the electrical system.

According to any of the above embodiments, in this embodiment:

the at least two types of batteries include a target battery, and a quantity of the target battery:

is positively correlated with an upper limit of the target voltage range; and,
is positively correlated with a lower limit of the target voltage range; and,
is negatively correlated with an upper limit of the cell open-circuit voltage range of the target battery; and,
is negatively correlated with a lower limit of the cell open-circuit voltage range of the target battery.

In an optional implementation:

let a discharge cutoff voltage of a battery cell of an i-th type of battery in the hybrid battery pack 101 be $U_{1i}$(V), a charge cutoff voltage of the battery cell of the i-th type of battery in the hybrid battery pack 101 be $U_{2i}$(V), and a quantity of the i-th type of battery in the hybrid battery pack 101 be $x_i$.

Let an operating voltage range of the electrical system matched by the hybrid battery pack 101 be $[U_a, U_b]$.

Then, a first equation can be formulated based on a lower limit $U_a$ of the operating voltage range of the electrical system:

$$\sum_i U_{1i} x_i = U_a$$

Similarly, a second equation can be formulated based on a lower limit $U_b$ of the operating voltage range of the electrical system:

$$\sum_i U_{2i} x_i = U_b$$

Thus, the quantity of the target battery satisfying the requirements of this embodiment can be obtained.

The beneficial effect of this embodiment lies in that:

it provides a calculation method for the quantity of the target battery, namely, being positively correlated with the upper and lower limits of the target voltage range and negatively correlated with the upper and lower limits of the cell open-circuit voltage range of the target battery, laying a good foundation for calculating the construction parameters of the hybrid battery pack 101.

According to any of the above embodiments, in another embodiment:

the step of rounding the numerical solution or the numerical solution set to obtain the quantity of the at least two types of batteries includes:

rounding the numerical solution set to obtain an integer solution set; and
determining, based on cell capacities of the at least two types of batteries and a preset target total capacity, one integer solution from the integer solution set as the quantity of the at least two types of batteries.

In this embodiment, capacity is introduced as a construction constraint parameter for the hybrid battery pack 101, enabling the construction of a third equation based on capacity to further constrain the construction parameters of the hybrid battery pack 101.

By way of example and not limitation, the third equation can be formulated as follows:

let a cell voltage of an i-th type of battery in the hybrid battery pack 101 be $U'i$(V), a target total capacity of the hybrid battery pack 101 be E (Wh), and an available capacity of a battery cell of the i-th type of battery in the hybrid battery pack 101 in a reasonable charge-discharge range be $C_i$(Ah). Then, the third equation can be obtained:

$$\sum_i U'_i C_i = E$$

It is worth noting that, for multiple parallel hybrid units in the hybrid battery pack 101, the capacity of each hybrid unit can be additive. That is, if the capacity of the j-th hybrid unit among M parallel hybrid units is denoted as $E'_j$, the total capacity of the hybrid battery pack 101 is the sum of $\Sigma_j E'_j$. Therefore, when calculating the third equation, M sub-equations can be formulated based on the number M of parallel hybrid units to achieve flexible settings for the capacity constraint parameter.

The beneficial effect of this embodiment lies in that:

it introduces the parameters of cell capacity and target total capacity, providing constraints for selecting an integer solution from the integer solution set as the quantity of the at least two types of batteries, thereby obtaining construction parameters for the hybrid battery pack 101 that better match the electrical system.

According to any of the above embodiments, in another embodiment:

the hybrid battery pack 101 is configured to power a preset electrical system, an output voltage range of the hybrid battery pack 101 being a subset of an operating voltage range of the electrical system; and the output voltage range of the hybrid battery pack 101 is calculated based on the quantity of the at least two types of batteries and the cell open-circuit voltage ranges of the at least two types of batteries.

As previously explained, due to the rounding process and/or other potential sources of error (for example, approximate calculations due to data types), the actual output voltage range of the hybrid battery pack 101 may deviate slightly from the target voltage range. Therefore, this embodiment adds a constraint condition based on a corrected voltage range on the basis of any of the above embodiments to improve the matching degree between the constructed hybrid battery pack 101 and the electrical system.

Further, in some optional implementations of this embodiment, regardless of how the hybrid units within the hybrid battery pack 101 are connected, the hybrid battery pack 101 powers the preset electrical system as a whole, rather than one or some hybrid units powering one module of the electrical system while another or some hybrid units power other modules of the electrical system.

In some other optional implementations, the electrical system may include multiple systems with significantly different operating voltage ranges, such as a high-voltage part and a low-voltage part. In such cases, steps 102 and 104 can be executed separately for the high-voltage part and the low-voltage part to obtain a hybrid battery pack 101 for the high-voltage part and a hybrid battery pack 101 for the low-voltage part, respectively, to power the high-voltage part and the low-voltage part independently. In this implementation, the hybrid battery pack 101 for the high-voltage part and the hybrid battery pack 101 for the low-voltage part supply power independently (although, in some specific cases, the energy of one hybrid battery pack 101 can be used to charge the other hybrid battery pack 101, their power supply processes are independent).

The beneficial effect of this embodiment lies in that:

it introduces a secondary judgment based on the corrected voltage range, avoiding the issue where the actual output voltage of the hybrid battery pack 101 cannot strictly match the operating voltage range required by the electrical system due to errors in the calculation process (for example, rounding errors or approximate calculations due to data type settings in program operations).

According to any of the above embodiments, in another embodiment:

the hybrid battery pack 101 is configured to power the preset electrical system, the output voltage range of the hybrid battery pack 101 being a subset of the operating voltage range of the electrical system, and the output voltage range of the hybrid battery pack 101 is calculated based on the quantity of the at least two types of batteries, the cell open-circuit voltage ranges of the at least two types of batteries, cell internal resistances of the at least two types of batteries, and a power of the electrical system.

The calculation process based on the target voltage range and the cell open-circuit voltages of the at least two types of batteries is a mathematical operation under ideal conditions. However, when the hybrid battery pack 101 actually powers the electrical system, due to the presence of battery internal resistance, at least a portion of the voltage actually applied to the electrical system by the hybrid battery pack 101 will be consumed by the battery internal resistance. Therefore, this embodiment introduces a corrected voltage range constraint condition based on the battery internal resistance and the power of the electrical system.

By way of example and not limitation, the constraint for the corrected voltage range can be formulated as follows:

after calculating a numerical solution $x_i$ based on the first equation and the second equation (and in some cases, the third equation), $x_i$ is rounded, or an optimal positive integer solution $x'_i$ is tested around $x_i$. Subsequently, an actual matched operating voltage range $\left[U'_a, U'_b\right]$ of the hybrid battery pack 101 is calculated based on the optimal solution $x'_i$, namely:

$$U'_a = \sum_i U_{1i} x'_i$$

$$U'_b = \sum_i U_{2i} x'_i$$

The operating voltage range of the battery system can be determined comprehensively based on the operating voltage range of each electrical subsystem, the load size of the electrical system, the internal resistance of each type of battery, and the number of series connections of each type of battery.

Assuming the operating voltage range of the electrical system is [$U_{min}$, $U_{max}$], and a cell internal resistance of an i-th type of battery in the hybrid battery pack 101 is $r_i$, the quantity $x'_i$ of each type of battery should satisfy the following inequality:

$$\begin{cases} U'_a - \dfrac{P}{U'_a} \times \sum_i x'_i r_i > U_{min} \\ \sum_i U_{2i} x'_i = U'_b < U_{max} \end{cases}$$

If the optimal solution $x'_i$ does not satisfy the above inequalities, the step of obtaining $x'_i$ from $x_i$ should be repeated until an $x'_i$ satisfying the above inequalities is obtained.

For an optimal solution $x'_i$ satisfying the above inequalities, if a static open-circuit voltage range of a battery cell in the hybrid battery pack 101 is [$U_{cellocv1i}$, $U_{cellocv2i}$], respectively, then a static open-circuit voltage range of the hybrid battery pack 101 is [$U_{ocv1}$, $U_{ocv2}$]:

$$U_{ocv1} = \sum_i U_{cellocv1i} x'_i$$

$$U_{ocv2} = \sum_i U_{cellocv2i} x'_i$$

It is worth noting that the operating voltage range [$U_{min}$, $U_{max}$] of the electrical system may differ from the target voltage range. That is, the target voltage range, as a computational constraint, can be adjusted based on the actual electrical parameters of the electrical system to obtain appropriate construction parameters for the hybrid battery pack 101.

However, constraints based on the operating voltage range of the electrical system are necessary, as exceeding the [$U_{min}$, $U_{max}$] range would at least pose a risk of the vehicle electrical system 102 operating outside its optimal condition.

Furthermore, in a preferred implementation, $U_{min}$ should consider the lower limit operating voltage of each electrical subsystem. In some cases, the lower limit operating voltage of an electrical subsystem may be a range, in which case the maximum value within the lower limit range can be selected as $U_{min}$. Similarly, $U_{max}$ should consider the upper limit operating voltage of each electrical subsystem, and for an electrical subsystem with an upper limit operating voltage as a range, the minimum value within the upper limit range is taken.

The beneficial effect of this embodiment lies in that:

it further considers the cell internal resistance and the power of the electrical system to construct a corrected voltage range, obtaining a corrected voltage range that is more aligned with actual operating conditions as the basis for secondary judgment, better avoiding the issue where the actual output voltage of the hybrid battery pack 101 cannot strictly match the operating voltage range required by the electrical system due to errors in the calculation process (for example, rounding errors or approximate calculations due to data type settings in program operations).

According to any of the above embodiments, a series of embodiments will be provided below for the vehicle electrical system and its matched hybrid battery pack 101. In another embodiment:

the at least two types of batteries include a first battery, the first battery being a sodium-ion battery; and the electrical system includes a vehicle electrical system.

The static open-circuit voltage (OCV) range of sodium-ion batteries from a fully discharged state to a fully charged state is wide, and after being formed into a battery system, its operating voltage range has poor compatibility with the operating voltage range of current mature high-voltage electrical systems.

By forming a hybrid battery pack with lithium iron phosphate batteries, ternary lithium-ion batteries, or other batteries with narrower open-circuit voltage ranges and sodium-ion batteries in a certain proportion, the characteristic of lithium iron phosphate batteries and ternary lithium-ion batteries (or other batteries with narrower open-circuit voltage ranges) having a narrower static open-circuit voltage range than sodium-ion batteries is utilized to adjust the static open-circuit voltage of the battery system, thereby adjusting the operating voltage range of the battery system to be compatible with the operating voltage range of current mainstream mature electrical systems, achieving rapid integrated development of the entire vehicle.

In other words, this embodiment uses sodium-ion batteries as one type of battery in the hybrid battery pack 101 for powering the vehicle electrical system, significantly reducing the cost of the hybrid battery pack 101 through the more economical sodium-ion batteries while ensuring that the direct output voltage of the hybrid battery pack 101 matches the vehicle electrical system.

Further, in some optional implementations, the at least two types of batteries further include a second battery, the second battery being a ternary lithium-ion battery or a lithium iron phosphate battery.

Specifically, these optional implementations include the following two schemes:

The first scheme is an implementation of forming the hybrid battery pack 101 with two types of batteries, specifically:

the at least two types of batteries consist of the first battery and a second battery; and the second battery is a ternary lithium-ion battery or a lithium iron phosphate battery.

This scheme, by combining ternary lithium-ion batteries or lithium iron phosphate batteries with sodium-ion batteries, can more effectively address the issue of the wider open-circuit voltage range of sodium-ion batteries. Meanwhile, a binary hybrid battery pack 101 can better balance the complexity of the battery system (management difficulty of the battery system) and the need for cost reduction, making it more suitable for existing vehicle applications.

The second scheme is an implementation of forming the hybrid battery pack 101 with three types of batteries, specifically:

the at least two types of batteries consist of the first battery, the second battery, and a third type of battery; where the second battery is a ternary lithium-ion battery; and the third type of battery is a lithium iron phosphate battery.

Similarly, this scheme, by combining ternary lithium-ion batteries and lithium iron phosphate batteries with sodium-ion batteries, can more effectively address the issue of the wider open-circuit voltage range of sodium-ion batteries. Meanwhile, a ternary hybrid battery pack 101 provides more parameter adjustment space, enhancing the versatility and compatibility of the battery system.

According to any of the above embodiments, in another embodiment:

the vehicle includes a hybrid battery pack 101 accommodation space, the hybrid battery pack 101 accommodation space and a shape of the at least two types of batteries being configured to constrain the quantity of the at least two types of batteries, or, the battery pack accommodation space and the quantity of the at least two types of batteries being configured to constrain a shape of the at least two types of batteries.

In this embodiment, the construction constraint parameters of the hybrid battery pack 101 further include a shape of the hybrid battery pack 101 and a shape of the accommodation space in the vehicle for accommodating the hybrid battery pack 101.

Specifically, in an optional implementation, the accommodation space for the hybrid battery pack 101 in the vehicle is already determined, but the shape and structure of the battery cells are not yet determined. The quantity of the at least two types of batteries calculated in step 204 can be used to obtain an average volume of each battery cell. Since the structures of different types of batteries may vary, there may be cases where a design volume of the first battery is larger and a design volume of the second battery is smaller (or other size proportions). In this case, the shape and volume of each type of battery are designed and constrained based on the hybrid battery pack 101 accommodation space, obtaining a battery cell design scheme that can be accommodated in the hybrid battery pack 101 accommodation space.

In another optional implementation, the accommodation space for the hybrid battery pack 101 in the vehicle is already determined, and the shape and structure of the battery cells are also determined (for example, battery cells procured from a specific manufacturer or battery cells with a completed design). In this case, based on the hybrid battery pack 101 accommodation space and the shape of each type of battery cell, constraints can be applied during the process of rounding the numerical solution or determining a numerical solution from the numerical solution set using shape conditions.

It is worth noting that the sum of the products of the volume and quantity of each type of battery cell should not exceed the volume of the hybrid battery pack 101 accommodation space. Additionally, after stacking, the shape of the battery cells should be able to fit within the battery pack accommodation space.

In other words, under the premise that the volume condition is satisfied, by adjusting the stacking method of each type of battery cell, it is possible to adapt to a hybrid battery pack 101 accommodation space with a specific shape.

In some specific cases, although the volume condition can be satisfied, due to the special shape of the battery pack accommodation space, the battery cells of each type cannot be stacked into a shape that can be accommodated in the hybrid battery pack 101 accommodation space. In such cases, the step of rounding the numerical solution or selecting a numerical solution from the numerical solution set should be repeated.

The beneficial effect of this embodiment lies in that:

it uses the accommodation space for the hybrid battery pack 101 in the vehicle as a constraint parameter for the hybrid battery pack 101, enabling the design shape and volume of the battery cells to be constrained by the quantity of the at least two types of batteries, or the quantity of the batteries to be constrained by the shape and volume of the at least two types of batteries, providing a good foundation for the spatial structure design of the entire vehicle.

According to any of the above embodiments, a complete and specific embodiment will be provided below, taking the scenario of an electric vehicle as an example.

This embodiment aims to provide a battery system assembly method. By mixing one, two, or more (considering the complexity of system assembly and battery management, preferably one) types of batteries with different chemical systems and different voltage characteristics with sodium-ion batteries in a certain method, compatibility with current mature high-voltage electrical systems is achieved, while increasing the available capacity of the battery system itself (expanding the charge-discharge SOC window in vehicle applications).

The focus of this embodiment lies in:

1. By mixing lithium iron phosphate batteries or ternary lithium-ion batteries with sodium-ion batteries in a certain proportion, the characteristic of lithium iron phosphate batteries and ternary lithium-ion batteries having a narrower static open-circuit voltage range than sodium-ion batteries is utilized to adjust the static open-circuit voltage of the battery system (that is, the hybrid battery pack 101), thereby adjusting the operating voltage range of the battery system to be compatible with the operating voltage range of current mainstream mature electrical systems, achieving rapid integrated development of the entire vehicle.

2. The assembly method for batteries of different chemical systems (that is, different types of the at least two types of batteries) within the battery pack. Battery cells of different systems are connected in series. Batteries of the same chemical system are arranged in the same row. Batteries of different chemical systems can be arranged alternately.

In some optional implementations, battery cells of two different chemical systems should generally have the same length and height dimensions, and the electrode posts of the battery cells can be aligned in the length and height directions.

Batteries of different chemical systems can also be arranged in separate regions. Regional arrangement allows for more flexible battery cell size design.

3. For a battery system including multiple battery packs (that is, hybrid units), the battery packs are connected in series. A single battery pack may contain batteries of the same chemical system or multiple batteries of different chemical systems assembled according to the above method.

The purpose of this embodiment lies in:

1. Taking the mainstream 400V voltage platform for passenger vehicles as an example, the typical operating voltage range of the high-voltage electrical system of the vehicle is approximately 200 to 480V. When assembled with sodium-ion batteries alone, the operating voltage range of the battery system is usually difficult to be contained within the high-performance or high-efficiency voltage range of a conventional high-voltage electrical system. However, by mixing a certain proportion of lithium iron phosphate batteries or ternary lithium-ion batteries, the operating voltage of the battery system can be adjusted to a more ideal range.

2. Increasing the flexibility of assembling batteries of different chemical systems within the battery pack. By arranging batteries of different chemical systems in different regions, the requirements for battery size can be reduced.

3. Being applicable to passenger vehicles typically having only one battery pack, and being able to be extended to commercial vehicles and other fields with multiple battery packs.

Specifically, the scheme of this embodiment is: by mixing lithium iron phosphate/ternary batteries with sodium-ion batteries, the operating voltage range of the entire battery system is adjusted. One type of battery in the mixed battery system is sodium-ion batteries.

Assume a discharge cutoff voltage of a battery cell of each chemical system in the battery pack is $U_{1i}$(V), a charge cutoff voltage of a battery cell of each chemical system is $U_{2i}$(V), a voltage of a battery cell of each chemical system is $U'i$(V), a target total capacity of the battery system is E (Wh), and an available capacity of a battery cell of each chemical system in a reasonable charge-discharge range is $C_i$(Ah). Assume quantities of sodium-ion batteries and other chemical system batteries (lithium iron phosphate batteries or ternary lithium-ion batteries) in the battery system are $x_i$.

Assume a matched operating voltage range of the battery system is $[U_a, U_b]$.

$$\begin{cases} \sum_i U_{1i}x_i = U_a \\ \sum_i U_{2i}x_i = U_b \\ \sum_i U'_i C_i = E \end{cases}$$

By solving the above equations simultaneously, in a battery system with three chemical systems mixed, the above three equations can be solved, and based on constraints such as the internal arrangement space of the battery pack and the specific arrangement form of the battery cells, $x_i$ is rounded or an optimal positive integer solution $x'_i$ is tested around $x_i$. Then, an actual matched operating voltage range of the battery system is $[U'_a, U'_b]$.

$$U'_a = \sum_i U_{1i}x'_i$$

$$U'_b = \sum_i U_{2i}x'_i$$

The operating voltage range of the battery system can be determined comprehensively based on an operating voltage range of each electrical subsystem of the entire vehicle, a load size of the electrical system, an internal resistance of each chemical system battery, and a number of series connections of each chemical system battery.

Assume an operating voltage range of the vehicle electrical system 102 is $[U_{min}, U_{max}]$ ($U_{min}$ should consider a lower limit operating voltage of each electrical subsystem of the entire vehicle and take the maximum value: $U_{max}$ should consider an upper limit operating voltage of each electrical subsystem of the entire vehicle and take the minimum value), and a cell internal resistance of sodium-ion batteries and other chemical system batteries is $r_i$. A quantity of sodium-ion batteries and other chemical system batteries in the battery system should satisfy the following inequality:

$$\begin{cases} U'_a - \dfrac{P}{U'_a} \times \displaystyle\sum_i x'_i r_i > U_{min} \\ \displaystyle\sum_i U_{2i} x'_i = U'_b < U_{max} \end{cases}$$

A static open-circuit voltage range of sodium-ion battery cells and other chemical system battery cells in the battery pack is $[U_{cellocv1i}, U_{cellocv2i}]$, respectively, then a static open-circuit voltage range of the battery system is $[U_{ocv1}, U_{ocv2}]$:

$$U_{ocv1} = \sum_i U_{cellocv1i} x'_i$$

$$U_{ocv2} = \sum_i U_{cellocv2i} x'_i$$

Below, two implementations based on the scheme of this embodiment will be provided for effect comparison.

Depending on the operating voltage matched by the high-voltage electrical system of a specific vehicle, the mixing ratio between sodium-ion batteries and other chemical system batteries may vary. In this embodiment, a comparison is made between two implementations: a 1:1 ratio of sodium-ion batteries to lithium iron phosphate batteries (in an optional implementation, specifically 60 series: 60 series) and a 5:4 ratio of sodium-ion batteries to ternary lithium-ion batteries (in an optional implementation, specifically 60 series: 48 series).

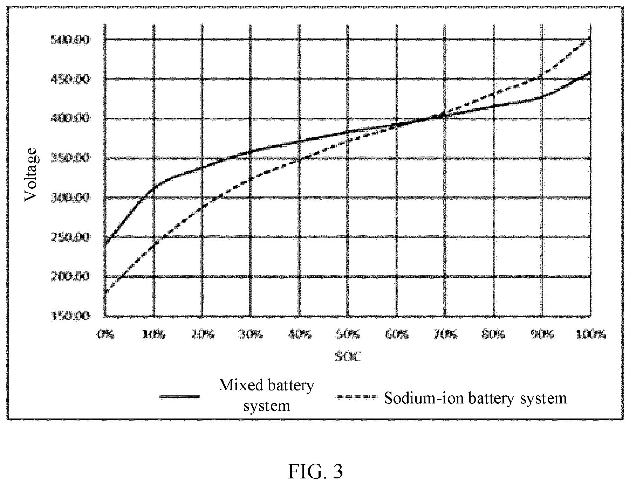

As shown in FIG. 3, taking a battery system with 120 series as an example, when assembled with sodium-ion batteries, an open-circuit voltage of the battery system from a fully discharged state to a fully charged state is approximately 180 to 500V. If the battery system is mixed with a 1:1 ratio of sodium-ion batteries and lithium iron phosphate batteries (a common lithium iron phosphate battery cell has an open-circuit voltage of approximately 2.5V to 3.5V), an open-circuit voltage of the battery system can be adjusted to approximately 240 to 460V. (It should be noted that the open-circuit voltage characteristics of batteries from different manufacturers and with different specific formulations may slightly vary.)

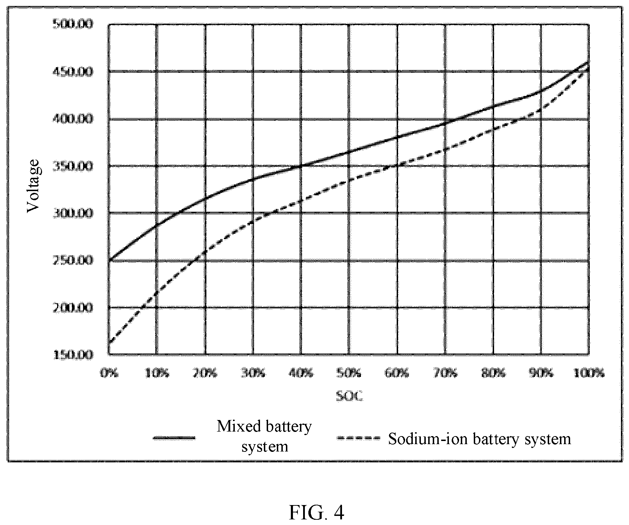

As shown in FIG. 4, taking a battery system with 108 series as an example, when assembled with sodium-ion batteries, a static terminal voltage of the battery system from a fully discharged state to a fully charged state is approximately 160 to 450V. If the battery system is mixed with a 5:4 ratio of sodium-ion batteries and ternary lithium-ion batteries (a common ternary lithium-ion battery has an open-circuit voltage range of approximately 3V to 3.9V), a static terminal voltage of the battery system can be adjusted to approximately 250 to 460V. (It should be noted that the terminal voltage characteristics of batteries from different manufacturers and with different specific formulations may slightly vary.)

Further, within the same battery pack (that is, a hybrid unit in the hybrid battery pack 101), batteries of different chemical systems can be arranged in the following two assembly methods. This example only illustrates the general positional relationship of battery cells of different chemical systems within the battery pack. The assembly method for battery cells can be with or without modules.

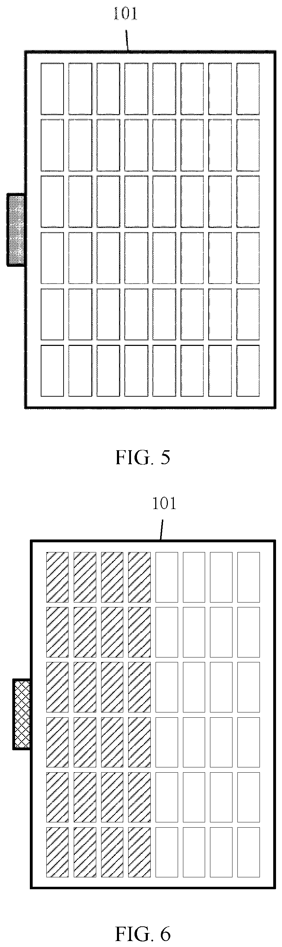

1. Within the same battery pack, battery cells of different chemical systems are arranged alternately, and battery cells of the same chemical system are arranged in the same row, as shown in FIG. 5.

This assembly method has higher requirements for the size of different types of battery cells. Typically, an ideal battery cell size design should have the same cell length, height, and electrode post spacing. The thickness of the cells can be adjusted based on capacity needs.

Of course, these size design principles are not necessary conditions but are optional solutions provided to simplify the system structure design.

2. Within the same battery pack, battery cells of different chemical systems are arranged in different regions, as shown in FIG. 6.

Considering the lifespan differences between batteries of different chemical systems, this assembly method facilitates the secondary use and recycling of batteries after retirement.

For commercial vehicles or other commercial products with multiple battery packs, it is possible to consider mixing different types of battery packs (each battery pack containing cells of the same type).

3. The battery system can include multiple battery packs. The battery packs can contain battery cells of the same chemical system or battery cells of different chemical systems mixed according to the above method.

It is also possible to have multiple external branches connected in parallel, as shown in the figures.

Battery packs with different assembly methods but the same number of A cells and B cells can also be used in parallel.

It should be understood that the numbering of the steps in the above embodiments does not imply the order of execution. The execution order of each process should be determined by its function and internal logic and should not constitute any limitation on the implementation process of the embodiments of this application.

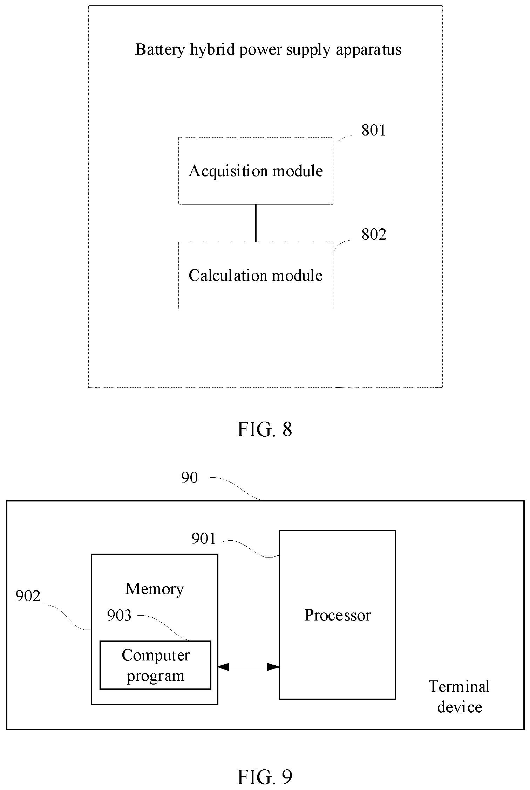

Corresponding to the battery hybrid power supply method described in the above embodiments, FIG. 8 shows a structural block diagram of a battery hybrid power supply apparatus provided by an embodiment of this application. For convenience of explanation, only the parts related to the embodiments of this application are shown.

Referring to FIG. 2, the apparatus includes:

an acquisition module 801 configured to acquire a target voltage range, and cell open-circuit voltage ranges of at least two types of batteries; and

a calculation module 802 configured to calculate, based on the cell open-circuit voltage ranges of the at least two types of batteries, a quantity of the at least two types of batteries matching the target voltage range; where the quantity of the at least two types of batteries is configured to construct the hybrid battery pack 101.

In an optional implementation, the calculation module 802 includes:

a numerical unit configured to calculate, based on the target voltage range and the cell open-circuit voltage ranges of the at least two types of batteries, a numerical solution or a numerical solution set for the quantity of the at least two types of batteries; and

a rounding unit configured to round the numerical solution or the numerical solution set to obtain the quantity of the at least two types of batteries.

In an optional implementation, the at least two types of batteries include a target battery, and a quantity of the target battery:

is positively correlated with an upper limit of the target voltage range; and,

is positively correlated with a lower limit of the target voltage range; and,

is negatively correlated with an upper limit of a cell open-circuit voltage range of the target battery; and,

is negatively correlated with a lower limit of the cell open-circuit voltage range of the target battery.

In an optional implementation, the calculation module 802 includes:

an integer solution set unit configured to round the numerical solution set to obtain an integer solution set; and

a capacity constraint unit configured to determine, based on cell capacities of the at least two types of batteries and a preset target total capacity, one integer solution from the integer solution set as the quantity of the at least two types of batteries.

In an optional implementation, the hybrid battery pack is configured to power a preset electrical system, an output voltage range (corrected voltage range) of the hybrid battery pack 101 being a subset of an operating voltage range of the electrical system; where the output voltage range of the hybrid battery pack 101 is calculated based on the quantity of the at least two types of batteries and the cell open-circuit voltage ranges of the at least two types of batteries.

In an optional implementation, the hybrid battery pack 101 is configured to power a preset electrical system, an output voltage range of the hybrid battery pack 101 being a subset of an operating voltage range of the electrical system; and the output voltage range of the hybrid battery pack 101 is calculated based on the quantity of the at least two types of batteries, the cell open-circuit voltage ranges of the at least two types of batteries, a cell internal resistance of the at least two types of batteries, and a power of the electrical system.

In an optional implementation, the at least two types of batteries include a first battery, the first battery being a sodium-ion battery; and the electrical system includes a vehicle electrical system.

In an optional implementation, the at least two types of batteries further include a second battery; and the second battery is a ternary lithium-ion battery or a lithium iron phosphate battery.

In an optional implementation, the at least two types of batteries consist of the first battery, a second battery, and a third type of battery; the second battery is a ternary lithium-ion battery; and the third type of battery is a lithium iron phosphate battery.

In an optional implementation, the vehicle includes a hybrid battery pack 101 accommodation space, the hybrid battery pack 101 accommodation space and a shape of the at least two types of batteries being configured to constrain the quantity of the at least two types of batteries, or, the battery pack accommodation space and the quantity of the at least two types of batteries being configured to constrain a shape of the at least two types of batteries.

It should be noted that the information interaction, execution processes, and other contents between the above apparatuses/units are based on the same concept as the method embodiments of this application. Their specific functions and technical effects can be referred to in the method embodiments section and are not repeated here.

It will be clear to those skilled in the art that, for convenience and brevity of description, the division into the above functional units and modules is only used as an example. In practical applications, the above functions can be allocated to different functional units and modules as needed, that is, an internal structure of the apparatus is divided into different functional units or modules to implement all or part of the functions described above. Each functional unit and module in the embodiments can be integrated into one processing unit, or each unit can exist physically separately, or two or more units can be integrated into one unit. The integrated unit can be implemented in the form of hardware or software functional units. In addition, the specific names of each functional unit and module are only for the convenience of distinguishing from each other and are not used to limit the scope of protection of this application. The specific working processes of the units and modules in the above system can refer to the corresponding processes in the foregoing method embodiments and are not repeated here.

An embodiment of this application also provides a terminal device, as shown in FIG. 9, the terminal device 90 includes: at least one processor 901, a memory 902, and a computer program 903 stored in the memory and executable on the at least one processor, where the processor, when executing the computer program, implements the steps in any of the above method embodiments.

An embodiment of this application also provides a computer-readable storage medium, the computer-readable storage medium storing a computer program, where the computer program, when executed by a processor, implements the steps in any of the above method embodiments.

An embodiment of this application provides a computer program product, where when the computer program product runs on a mobile terminal, the mobile terminal, when executing, implements the steps in any of the above method embodiments.

An embodiment of this application provides a vehicle, including a hybrid battery pack 101, the hybrid battery pack 101 including at least two types of batteries, and a quantity of the at least two types of batteries in the hybrid battery pack 101 being calculated according to the battery hybrid power supply method described above.

If the integrated unit is implemented in the form of a software functional unit and sold or used as an independent product, it can be stored in a computer-readable storage medium. Based on this understanding, all or part of the processes in the methods of the above embodiments of this application can be implemented by instructing related hardware through a computer program. The computer program can be stored in a computer-readable storage medium, and when executed by a processor, the computer program can implement the steps of the above method embodiments. The computer program includes computer program code, which can be in the form of source code, object code, executable files, or certain intermediate forms. The computer-readable medium may include at least: any entity or apparatus capable of carrying the computer program code to a photographing apparatus/terminal device, a recording medium, a computer memory, a read-only memory (ROM), a random access memory (RAM), an electrical carrier signal, a telecommunication signal, and a software distribution medium, such as a USB flash drive, a mobile hard disk, a magnetic disk, or an optical disk. In some jurisdictions, according to legislation and patent practice, a computer-readable medium cannot be an electrical carrier signal or a telecommunication signal.

In the above embodiments, the description of each embodiment has its own emphasis, and parts not detailed or recorded in one embodiment can refer to the relevant descriptions of other embodiments.

Those skilled in the art will appreciate that the units and algorithm steps of the examples described in connection with the embodiments disclosed herein can be implemented by electronic hardware or a combination of computer software and electronic hardware. Whether these functions are executed by hardware or software depends on the specific application and design constraints of the technical solution. Those skilled in the art can use different methods to implement the described functions for each specific application, but such implementations should not be considered beyond the scope of this application.

In the embodiments provided by this application, it should be understood that the disclosed apparatus/network device and method can be implemented in other ways. For example, the apparatus/network device embodiments described above are merely illustrative. For example, the division of the modules or units is only a logical function division, and in actual implementation, there may be other division methods, such as multiple units or components can be combined or integrated into another system, or some features can be omitted or not executed. In addition, the shown or discussed mutual couplings or direct couplings or communication connections may be implemented through some interfaces. The indirect couplings or communication connections between apparatuses or units may be implemented in electrical, mechanical, or other forms.

The units described as separate components may or may not be physically separate. A component shown as a unit may or may not be a physical unit and may be located in one place or distributed across multiple places. Some or all of the units can be selected according to actual needs to achieve the objectives of the solutions in the embodiments.

The above embodiments are only used to illustrate the technical solutions of this application and not to limit them. Although this application has been described in detail with reference to the foregoing embodiments, those skilled in the art should understand that they can still modify the technical solutions described in the foregoing embodiments or make equivalent substitutions for some of the technical features. Such modifications or substitutions do not depart from the spirit and scope of the technical solutions of the embodiments of this application and should be included within the scope of protection of this application.

**Claims**

1. A battery hybrid power supply method, wherein the method comprises:

   acquiring a target voltage range, and cell open-circuit voltage ranges of at least two types of batteries; and
   calculating, based on the cell open-circuit voltage ranges of the at least two types of batteries, a quantity of the at least two types of batteries matching the target voltage range; wherein the quantity of the at least two types of batteries is configured to construct a hybrid battery pack.

2. The battery hybrid power supply method according to claim 1, wherein the calculating, based on the cell open-circuit voltage ranges of the at least two types of batteries, a quantity of the at least two types of batteries matching the target voltage range comprises:

calculating, based on the target voltage range and the cell open-circuit voltage ranges of the at least two types of batteries, a numerical solution or a numerical solution set for the quantity of the at least two types of batteries; and rounding the numerical solution or the numerical solution set to obtain the quantity of the at least two types of batteries.

3. The battery hybrid power supply method according to claim 2, wherein the rounding the numerical solution or the numerical solution set to obtain the quantity of the at least two types of batteries comprises:

rounding the numerical solution set to obtain an integer solution set; and determining, based on cell capacities of the at least two types of batteries and a preset target total capacity, one integer solution from the integer solution set as the quantity of the at least two types of batteries.

4. The battery hybrid power supply method according to any one of claims 1 to 3, wherein the hybrid battery pack is configured to power a preset electrical system, an output voltage range of the hybrid battery pack being a subset of an operating voltage range of the electrical system; and the output voltage range of the hybrid battery pack is calculated based on the quantity of the at least two types of batteries and the cell open-circuit voltage ranges of the at least two types of batteries.

5. The battery hybrid power supply method according to any one of claims 1 to 4, wherein the hybrid battery pack is configured to power the preset electrical system, the output voltage range of the hybrid battery pack being a subset of the operating voltage range of the electrical system; and the output voltage range of the hybrid battery pack is calculated based on the quantity of the at least two types of batteries, the cell open-circuit voltage ranges of the at least two types of batteries, cell internal resistances of the at least two types of batteries, and a power of the electrical system.

6. The battery hybrid power supply method according to any one of claims 1 to 5, wherein the at least two types of batteries comprise a target battery, a quantity of the target battery being positively correlated with an upper limit of the target voltage range, and the quantity of the target battery being positively correlated with a lower limit of the target voltage range; and
the quantity of the target battery is negatively correlated with an upper limit of a cell open-circuit voltage range of the target battery, and the quantity of the target battery is negatively correlated with a lower limit of the cell open-circuit voltage range of the target battery.

7. The battery hybrid power supply method according to any one of claims 1 to 6, wherein the at least two types of batteries comprise a first battery, the first battery being a sodium-ion battery; and the electrical system comprises a vehicle electrical system.

8. The battery hybrid power supply method according to claim 7, wherein a ratio of an upper limit of a cell open-circuit voltage range of the first battery to a lower limit of the cell open-circuit voltage range of the first battery is greater than a ratio of an upper limit of the target voltage range to a lower limit of the target voltage range.

9. The battery hybrid power supply method according to claim 7 or 8, wherein the at least two types of batteries further comprise a second battery, the second battery being a ternary lithium-ion battery or a lithium iron phosphate battery.

10. The battery hybrid power supply method according to claim 9, wherein a ratio of an upper limit of a cell open-circuit voltage range of the second battery to a lower limit of the cell open-circuit voltage range of the second battery is less than a ratio of an upper limit of the target voltage range to a lower limit of the target voltage range.

11. The battery hybrid power supply method according to claim 9 or 10, wherein the calculating, based on the cell open-circuit voltage ranges of the at least two types of batteries, a quantity of the at least two types of batteries matching the target voltage range comprises:

forming a first equation based on the lower limit of the cell open-circuit voltage range of the first battery, the lower limit of the cell open-circuit voltage range of the second battery, and the lower limit of the target voltage range; forming a second equation based on the upper limit of the cell open-circuit voltage range of the first battery, the upper limit of the cell open-circuit voltage range of the second battery, and the upper limit of the target voltage range; and obtaining, based on the first equation and the second equation, a quantity of the first battery and a quantity of the second battery.

12. The battery hybrid power supply method according to any one of claims 9 to 11, wherein the second battery is the ternary lithium-ion battery, and the at least two types of batteries further comprise a third type of battery, the third type of battery being the lithium iron phosphate battery.

13. A battery hybrid power supply apparatus, comprising:

an acquisition module configured to acquire a target voltage range, and cell open-circuit voltage ranges of at least two types of batteries; and a calculation module configured to calculate, based on the cell open-circuit voltage ranges of the at least two types of batteries, a quantity of the at least two types of batteries matching the target voltage range; wherein the quantity of the at least two types of batteries is configured to construct a hybrid battery pack.

14. A terminal device, comprising a memory, a processor, and a computer program stored in the memory and executable on the processor, wherein the processor, when executing the computer program, implements the battery hybrid power supply method according to any one of claims 1 to 12.

15. A computer-readable storage medium, the computer-readable storage medium storing a computer program, wherein the computer program, when executed by a processor, implements the battery hybrid power supply method according to any one of claims 1 to 12.

Battery parameters

Electrical parameters

FIG. 1

Acquire a target voltage range, and cell open-circuit voltage ranges of at least two types of batteries — 202

Calculate, based on the cell open-circuit voltage ranges of the at least two types of batteries, a quantity of the at least two types of batteries matching the target voltage range — 204

FIG. 2

FIG. 3

FIG. 4

101

FIG. 5

101

FIG. 6

101                    101

FIG. 7

Battery hybrid power supply apparatus

Acquisition module — 801

Calculation module — 802

FIG. 8

90

901

Memory

902
903

Computer
program

Processor

Terminal
device

FIG. 9

## INTERNATIONAL SEARCH REPORT

| International application No. |
| --- |
| **PCT/CN2023/140688** |

**A. CLASSIFICATION OF SUBJECT MATTER**

H01M10/42(2006.01)i

According to International Patent Classification (IPC) or to both national classification and IPC

**B. FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 电池, 电芯, 电压, 钠, 锂, 磷酸铁锂, 三元, 第二, 数量, 数目, batter+, cell?, core, voltage, sodium, lithium, iron, phosphate, ternary, second, number

**C. DOCUMENTS CONSIDERED TO BE RELEVANT**

| Category* | Citation of document, with indication, where appropriate, of the relevant passages | Relevant to claim No. |
| --- | --- | --- |
| X | CN 204615465 U (SUZHOU ANKAO ENERGY CO., LTD.) 02 September 2015 (2015-09-02) <br> description, paragraphs 5-21, and figure 1 | 1-15 |
| X | CN 114204101 A (ANHUI JIANGHUAI AUTOMOBILE GROUP CO., LTD.) 18 March 2022 (2022-03-18) <br> description, paragraphs 35-85, and figure 1 | 1-15 |
| A | CN 216958368 U (JIANGSU ZENERGY BATTERY TECHNOLOGIES CO., LTD.) 12 July 2022 (2022-07-12) <br> entire document | 1-15 |
| A | CN 217741360 U (XIAMEN MATE HI-TECH NEW ENERGY CO., LTD.) 04 November 2022 (2022-11-04) <br> entire document | 1-15 |
| A | US 9989595 B1 (HRL LABORATORIES, L.L.C.) 05 June 2018 (2018-06-05) <br> entire document | 1-15 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **07 March 2024** | **15 March 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2023/140688** |

| Patent document cited in search report | | | Publication date (day/month/year) | Patent family member(s) | Publication date (day/month/year) |
| --- | --- | --- | --- | --- | --- |
| CN | 204615465 | U | 02 September 2015 | None | |
| CN | 114204101 | A | 18 March 2022 | None | |
| CN | 216958368 | U | 12 July 2022 | None | |
| CN | 217741360 | U | 04 November 2022 | None | |
| US | 9989595 | B1 | 05 June 2018 | None | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310004403